# EUROPÄISCHE PATENTANMELDUNG

(11) **EP 3 396 919 A1**
(43) Veröffentlichungstag der Anmeldung: **31.10.2018**
(21) Anmeldenummer: 17168187.7
(22) Anmeldetag: 26.04.2017
(51) Int. Cl.: H04L 29/06

(54) **VERFAHREN ZUR DATENÜBERTRAGUNG VON EINEM GERÄT AN EIN DATENVERWALTUNGSMITTEL, VERMITTLUNGSEINHEIT, GERÄT UND SYSTEM**

(71) Anmelder: Siemens Aktiengesellschaft, 80333 München (DE)
(72) Erfinder: Verma, Amit, 91058 Erlangen (DE)

(57) **Zusammenfassung**

Die Erfindung betrifft ein Verfahren zur Datenübertragung (16) von einem Gerät (6) an ein Datenverwaltungsmittel (4). Um eine Anzahl an übertragenen Daten zu reduzieren, ist vorgesehen, dass bei dem Verfahren unter Verwendung von in dem Gerät (6) vorliegenden Modellierungsdaten (26, 42) ein Modell (30, 44) bestimmt wird, welches die Modellierungsdaten (26, 42) beschreibt. Unter Verwendung des Modells (30, 44) werden aus einer für eine Übertragung vorgesehenen Datenmenge (40) diejenigen Daten, die tatsächlich an das Datenverwaltungsmittel (4) zu übertragen sind, ausgewählt. Das Gerät (6) überträgt die ausgewählten Daten an das Datenverwaltungsmittel (4).

## Beschreibung

Die Erfindung betrifft ein Verfahren zur Datenübertragung von einem Gerät an ein Datenverwaltungsmittel.

Immer häufiger werden heutzutage Daten von einem Gerät an ein Datenverwaltungsmittel - beispielsweise eine Cloud - übermittelt. Das Datenverwaltungsmittel kann die Daten dann speichern, verwalten und/oder analysieren. Üblicherweise werden in dem Gerät große Datenmengen generiert, die üblicherweise über das Netzwerk an das Datenverwaltungsmittel übertragen werden sollen. Das kann dazu führen, dass das Netzwerk überlastet wird und/oder die Leistungsfähigkeit des Netzwerks beeinträchtigt wird. Werden die Daten per Mobilfunk an das Datenverwaltungsmittel gesendet, so entstehen außerdem aufgrund der großen Datenmengen hohe Kosten. Gegebenenfalls kann eine Bandbreite des Mobilfunks sogar ungenügend für das zu übermittelnde Datenvolumen sein.

Um das Datenvolumen zu reduzieren, können die Daten komprimiert werden. Durch die Datenkomprimierung kann das Datenvolumen jedoch nur in einem begrenzen Umfang reduziert werden.

Eine Aufgabe der Erfindung ist es, ein Verfahren zur Datenübertragung von einem Gerät an ein Datenverwaltungsmittel anzugeben, bei welchem das zu übertragende Datenvolumen reduziert wird.

Die Aufgabe wird gelöst durch ein Verfahren zur Datenübertragung von einem Gerät an ein Datenverwaltungsmittel, bei dem erfindungsgemäß unter Verwendung von in dem Gerät vorliegenden Modellierungsdaten ein Modell bestimmt wird, welches die Modellierungsdaten beschreibt. Unter Verwendung des Modells werden erfindungsgemäß aus einer für eine Übertragung vorgesehenen Datenmenge diejenigen Daten, die tatsächlich an das Datenverwaltungsmittel zu übertragen sind, ausgewählt. Das Gerät überträgt die ausgewählten Daten an das Datenverwaltungsmittel.

Die Idee der Erfindung ist es, nicht alle Daten einer für eine Übertragung vorgesehenen Datenmenge übermitteln zu müssen. Anhand des Modells kann ausgewählt werden, welche Daten der Datenmenge an das Datenverwaltungsmittel übermittelt werden. Auf diese Weise kann die Anzahl an übertragenen Daten - und damit vorzugsweise ein übertragenes Datenvolumen - reduziert werden.

Prinzipiell wäre es auch möglich, das übertragene Datenvolumen zu reduzieren, indem beispielsweise jeder zweite Datenwert oder Datenpunkt einer für eine Übertragung vorgesehenen Datenmenge übermittelt wird. Dabei kann jedoch eine Charakteristik der Datenmenge verloren gehen. Durch die Bestimmung des Modells kann auf eine sinnvolle Art und Weise ausgewählt werden, welche Daten übermittelt werden. Zweckmäßigerweise wird die Charakteristik der Datenmenge dabei von dem Modell berücksichtigt.

Das Gerät ist zweckmäßigerweise eine technisch betreibbare Einheit. Weiter kann das Gerät mehrere technisch betreibbare Einheiten umfassen, wobei jede der Einheiten einzeln funktionsfähig ist.

Beispielsweise kann das Datenverwaltungsmittel ein Server sein. Weiter kann das Datenverwaltungsmittel eine Cloud sein. Insbesondere kann das Datenverwaltungsmittel ein Internetder-Dinge-Service sein. Die übertragenen Daten können mittels des Datenverwaltungsmittels gespeichert und/oder verwaltet werden. Weiter können die übertragenen Daten mittels des Datenverwaltungsmittels analysiert und/oder visuell dargestellt werden.

Zweckmäßigerweise überträgt das Gerät die Modellierungsdaten zumindest teilweise an das Datenverwaltungsmittel. Weiter ist es bevorzugt, wenn das Modell mittels des Datenverwaltungsmittels bestimmt wird.

Vorzugsweise wird das Modell anhand der an das Datenverwaltungsmittel übertragenen Modellierungsdaten bestimmt.

Die Formulierung, dass das Modell "unter Verwendung von in dem Gerät vorliegenden Modellierungsdaten" bestimmt wird, kann dahingehend aufgefasst werden, dass das Modell zumindest anhand zumindest eines Teils der in dem Gerät vorliegenden Modellierungsdaten bestimmt wird. Das heißt, zur Bestimmung des Modells müssen nicht alle in dem Gerät vorliegenden Modellierungsdaten herangezogen werden. Vorzugsweise wird zur Bestimmung des Modells zumindest ein Teil der in dem Gerät vorliegenden Modellierungsdaten herangezogen. Außerdem können zur Bestimmung des Modells weitere Daten herangezogen werden.

Vorzugsweise ist das Modell ein mathematisches Modell. Weiter kann das Modell ein aktuelles Modell sein. Beispielsweise kann das Modell mittels eines Regressionsverfahrens bestimmt werden. Weiter kann das aktuelle Modell mittels maschinellem Lernen bestimmt werden. Insbesondere kann das aktuelle Modell mittels eines sogenannten Deep Learning bestimmt werden, beispielsweise unter Verwendung eines sogenannten neuralen Netzwerks. Weiter kann das aktuelle Modell mittels eines sogenannten Shallow Learning bestimmt werden, beispielsweise unter Verwendung einer sogenannten Support Vector Maschine.

Vorzugsweise überträgt das Gerät in einem ersten, früheren Übertragungsschritt die Modellierungsdaten zumindest teilweise an das Datenverwaltungsmittel. Zweckmäßigerweise wird das Modell zumindest anhand der, insbesondere in dem ersten, früheren Übertragungsschritt, übertragenen Modellierungsdaten bestimmt.

Weiter ist es bevorzugt, wenn in einem zweiten, zeitlich späteren Übertragungsschritt unter Verwendung des Modells aus der für eine Übertragung vorgesehenen Datenmenge diejenigen Daten, die tatsächlich an das Datenverwaltungsmittel zu übertragen sind, ausgewählt werden und das Gerät die ausgewählten Daten an das Datenverwaltungsmittel überträgt.

Zum Übertragen der Modellierungsdaten, zum Auswählen derjenigen Daten, die tatsächlich an das Datenverwaltungsmittel zu übertragen sind, und/oder zum Übertragen der ausgewählten Daten kann in dem Gerät eine Vermittlungseinheit vorgesehen sein.

Der zweite, zeitlich spätere Übertragungsschritt kann nach einem zeitlichen Abstand auf den ersten, früheren Übertragungsschritt folgen. Es ist bevorzugt, wenn der zweite, zeitlich spätere Übertragungsschritt direkt, d. h. ohne zeitlichen Abstand, auf den ersten, früheren Übertragungsschritt folgt.

Die Modellierungsdaten können bereits vor dem ersten Übertragungsschritt angefallen sein. Außerdem kann die für eine Übertragung vorgesehene Datenmenge bereits vor dem ersten Übertragungsschritt angefallen sein. Die Modellierungsdaten können beispielsweise zumindest einen Teil der erstgenannten, für eine Übertragung vorgesehenen Datenmenge umfassen. D. h., die in dem zweiten, späteren Übertragungsschritt zu übertragenden Daten und die Modellierungsdaten können aus ein und derselben Datenbasis ausgewählt werden.

Vorzugsweise fallen die Modellierungsdaten innerhalb des ersten, früheren Übertragungsschritts an. Weiter ist es bevorzugt, wenn die für eine Übertragung vorgesehene Datenmenge innerhalb des zweiten, späteren Übertragungsschritts anfällt. Zweckmäßigerweise umfassen die Modellierungsdaten zumindest einen Teil einer anderen Datenmenge als die erstgenannte, für eine Übertragung vorgesehene Datenmenge.

Wenn Daten irgendeiner Art anfallen, dann meint die Erfindung damit vorzugweise, dass die Daten ermittelt, bestimmt, gemessen, ausgelesen und/oder eingelesen werden.

In dem ersten, früheren Übertragungsschritt können alle Modellierungsdaten an das Datenverwaltungsmittel übertragen werden.

Es ist bevorzugt, wenn - insbesondere in dem ersten, früheren Übertragungsschritt - unter Verwendung eines früheren Modells aus den Modellierungsdaten diejenigen Modellierungsdaten, die an das Datenverwaltungsmittel zu übertragen sind, ausgewählt werden. Weiter kann - insbesondere in dem ersten, früheren Übertragungsschritt - das Gerät die ausgewählten Modellierungsdaten an das Datenverwaltungsmittel übertragen. Zumindest anhand der übertragenen Modellierungsdaten kann das erstgenannte Modell bestimmt werden. Das heißt, bei der Bestimmung des erstgenannten Modells kann das frühere Modell aktualisiert werden. Zweckmäßigerweise wird das frühere Modell durch das erstgenannte Modell ersetzt/aktualisiert.

Falls in dem ersten, früheren Übertragungsschritt einige Modellierungsdaten nicht übertragen werden, kann das frühere Modell zur Bestimmung des erstgenannten Modells herangezogen werden. Das heißt, das erstgenannte Modell kann anhand der übertragenen Modellierungswerte und anhand des früheren Modells bestimmt werden.

Falls in dem ersten, früheren Übertragungsschritt einige Modellierungsdaten nicht übertragen werden, können beispielsweise Soll-Daten für die in dem ersten, früheren Übertragungsschritt nicht übertragenen Modellierungsdaten anhand des früheren Modells bestimmt werden. Diese Soll-Daten liegen sinnvollerweise innerhalb des früheren Modells. Falls das frühere Modell eine frühere mathematische Funktion umfasst, können die Soll-Daten beispielsweise auf der früheren mathematischen Funktion liegen. Diese Soll-Daten können zur Bestimmung des erstgenannten Modells herangezogen werden. Das heißt, das erstgenannte Modell kann anhand der übertragenen Modellierungswerte und anhand der Soll-Daten bestimmt werden. Zweckmäßigerweise ist das in dem ersten, früheren Übertragungsschritt verwendete frühere Modell ein früheres mathematisches Modell.

Das in dem ersten, früheren Übertragungsschritt verwendete frühere Modell kann vorgegeben sein/werden. Beispielsweise kann das in dem ersten, früheren Übertragungsschritt verwendete frühere Modell mittels des Datenverwaltungsmittels vorgegeben werden. Prinzipiell ist es auch möglich, dass das in dem ersten, früheren Übertragungsschritt verwendete frühere Modell mittels des Geräts vorgegeben wird.

Beispielsweise kann das frühere Modell initial vorgegeben sein und/oder durch einen Anwender vorgegeben sein. Weiter kann das frühere Modell bestimmt worden sein.

Vorzugsweise ist das erstgenannte Modell ähnlich zu dem früheren Modell. Vorzugsweise bildet das erstgenannte Modell die Modellierungsdaten besser ab als das frühere Modell.

Das erstgenannte Modell kann eine mathematische Funktion umfassen. Weiter kann das erstgenannte Modell einen Toleranzbereich umfassen. Vorzugsweise legt sich der Toleranzbereich um die mathematische Funktion. Der Toleranzbereich kann explizit oder implizit vorgegeben sein. Beispielsweise kann der Toleranzbereich von den Modellierungsdaten und/oder von dem Modell abhängig sein. Zum Beispiel kann der Toleranzbereich ein vorgegebenes Vielfaches einer Standardabweichung der Funktion sein. Das Vielfache kann eine beliebige reelle Zahl sein, d. h. es muss sich nicht um ein ganzzahliges Vielfaches handeln. Weiter kann der Toleranzbereich eine Prozentzahl sein, die bestimmt, wie viele Modellierungsdaten innerhalb des Toleranzbereichs liegen.

Zweckmäßigerweise werden - insbesondere in dem zweiten, späteren Übertragungsschritt - diejenigen Daten, die innerhalb des Toleranzbereichs liegen, nicht ausgewählt und somit nicht an das Datenverwaltungsmittel übertragen. Ferner ist es bevorzugt, wenn - insbesondere in dem zweiten, späteren Übertragungsschritt - diejenigen Daten, die außerhalb des Toleranzbereichs liegen, ausgewählt werden und somit an das Datenverwaltungsmittel übertragen werden.

Das Verfahren und/oder seine Abwandlungen kann/können wiederholt werden.

Vorzugsweise wird unter Verwendung der in dem zweiten Übertragungsschritt übertragenen Daten ein aktualisiertes Modell bestimmt. In einem dritten Übertragungsschritt, welcher zeitlich nach dem zweiten Übertragungsschritt liegt, kann unter Verwendung des aktualisierten Modells aus einer für eine Übertragung vorgesehene Datenmenge diejenigen Daten, die tatsächlich an das Datenverwaltungsmittel zu übertragen sind, ausgewählt werden und das Gerät kann die ausgewählten Daten an das Datenverwaltungsmittel übertragen.

Die in dem dritten Übertragungsschritt für eine Übertragung vorgesehene Datenmenge kann die gleiche sein, wie die in dem zweiten Übertragungsschritt vorgesehene Datenmenge.

Vorzugsweise unterscheidet sich die in dem dritten Übertragungsschritt für eine Übertragung vorgesehene Datenmenge von der in dem zweiten Übertragungsschritt vorgesehenen Datenmenge. Beispielsweise kann die in dem dritten Übertragungsschritt für eine Übertragung vorgesehene Datenmenge innerhalb des dritten Übertragungsschrittes anfallen.

Prinzipiell ist es möglich, dass das aktualisierte Modell unter Verwendung derselben Modellierungsdaten bestimmt wird, wie das erstgenannte Modell. Das ist dann möglich, wenn die Modellierungsdaten und die für eine Übertragung vorgesehene Datenmenge die gleiche Datenbasis haben. Zweckmäßigerweise unterscheiden sich die Modellierungsdaten und die für eine Übertragung vorgesehene Datenmenge.

Die in dem zweiten Übertragungsschritt für eine Übertragung vorgesehene Datenmenge bildet vorzugsweise aktualisierte Modellierungsdaten. Unter Verwendung der in dem zweiten Übertragungsschritt übertragenen Daten kann ein aktualisiertes Modell bestimmt werden, welches zweckmäßigerweise die aktualisierten Modellierungsdaten beschreibt.

Bei der Bestimmung des aktualisierten Modells kann das erstgenannte Modell aktualisiert werden. Zweckmäßigerweise wird das erstgenannte Modell durch das aktualisierte Modell ersetzt/aktualisiert.

Vorzugsweise wird das Verfahren mehrmals wiederholt, sodass das erstgenannte Modell mehrmals aktualisiert wird.

Das erstgenannte Modell kann zu einem vorgegebenen Zeitpunkt bestimmt und/oder aktualisiert werden. Beispielsweise kann das erstgenannte Modell zu einem explizit vorgegebenen Zeitpunkt bestimmt und/oder aktualisiert werden, beispielsweise zu einer vorgegebenen Uhrzeit oder nach einer vorgegebenen Zeitspanne, beispielsweise nach 5 min, nach 1 h oder nach 12 h. Weiter kann das erstgenannte Modell zu einem implizit vorgegebenen Zeitpunkt bestimmt und/oder aktualisiert werden. Beispielsweise kann das erstgenannte Modell dann bestimmt und/oder aktualisiert werden, wenn eine vorgegebene Anzahl an Daten, beispielsweise insgesamt oder innerhalb einer vorgegebenen Zeit, an das Datenverwaltungsmittel übertragen wurde. Weiter kann das aktuelle Modell dann bestimmt und/oder aktualisiert werden, wenn die an das Datenverwaltungsmittel übertragenen Daten bestimmte Merkmale, z. B. ein bestimmtes Muster, aufweisen.

Die für eine Übertragung vorgesehene Datenmenge kann zeitabhängige Daten umfassen. Weiter kann die für eine Übertragung vorgesehene Datenmenge ortsabhängige Daten umfassen. Ferner kann die für eine Übertragung vorgesehene Datenmenge mehrdimensionale Daten aufweisen.

Die Erfindung und/oder seine Weiterbildungen kann/können als Software und/oder als Hardware, letztes beispielsweise unter Verwendung einer speziellen elektrischen Schaltung, realisiert sein.

Ferner ist eine Realisierung der Erfindung und/oder seiner beschriebenen Weiterbildung - zumindest teilweise, wie auch im Gesamten - möglich durch ein computerlesbares Speichermedium, auf welchem ein Computerprogramm mit Befehlen gespeichert ist, welche Befehle, wenn sie auf einem Computer ausgeführt werden, den Computer veranlassen, die Erfindung oder deren Weiterbildung auszuführen.

Ferner betrifft die Erfindung eine Vermittlungseinheit zur Datenübertragung von einem Gerät an ein Datenverwaltungsmittel. Erfindungsgemäß ist die Vermittlungseinheit dazu eingerichtet, unter Verwendung eines Modells, welches unter Verwendung von in dem Gerät vorliegenden Modellierungsdaten bestimmt wird und welches die Modellierungsdaten beschreibt, aus einer für eine Übertragung vorgesehenen Datenmenge diejenigen Daten, die tatsächlich an das Datenverwaltungsmittel zu übertragen sind, auszuwählen. Weiter kann die Vermittlungseinheit dazu eingerichtet sein, die ausgewählten Daten an das Datenverwaltungsmittel zu übertragen.

Die Vermittlungseinheit kann als Software und/oder als Hardware, letztes beispielsweise unter Verwendung einer speziellen elektrischen Schaltung, realisiert sein. Beispielsweise kann die Vermittlungseinheit ein sogenanntes Gateway sein.

Vorzugsweise ist die Vermittlungseinheit Teil des Geräts.

Die erfindungsgemäße Vermittlungseinheit kann zur Durchführung des zuvor genannten Verfahrens eingesetzt werden.

Vorzugsweise wird das Modell mittels des Datenverwaltungsmittels bestimmt. Der Vorteil, wenn das Modell mittels des Datenverwaltungsmittels bestimmt wird, liegt darin, dass üblicherweise in dem Datenverwaltungsmittel ausreichende Rechenleistung bzw. Rechenkapazität zur Bestimmung des Modells vorhanden ist. Weiter kann auf diese Weise die Vermittlungseinheit eher schlank gehalten werden. Das heißt, in der Vermittlungseinheit muss keine Rechenleistung bzw. Rechenkapazität zur Bestimmung des Modells vorgesehen werden.

Ferner betrifft die Erfindung ein Gerät mit einer Vermittlungseinheit zur Datenübertragung an ein Datenverwaltungsmittel. Die letztgenannte Vermittlungseinheit kann die zuvor genannte Vermittlungseinheit sein.

Erfindungsgemäß ist die letztgenannte Vermittlungseinheit dazu eingerichtet, unter Verwendung eines Modells, welches unter Verwendung von in dem Gerät vorliegenden Modellierungsdaten bestimmt wird und welches die Modellierungsdaten beschreibt, aus einer für eine Übertragung vorgesehenen Datenmenge diejenigen Daten, die tatsächlich an das Datenverwaltungsmittel zu übertragen sind, auszuwählen. Weiter ist das Gerät dazu eingerichtet, die ausgewählten Daten an das Datenverwaltungsmittel zu übertragen. Insbesondere kann die Vermittlungseinheit dazu eingerichtet sein, die ausgewählten Daten an das Datenverwaltungsmittel zu übertragen.

Weiter ist die Erfindung gerichtet auf ein System umfassend ein Datenverwaltungsmittel und das erfindungsgemäße Gerät.

Das Datenverwaltungsmittel ist erfindungsgemäß dazu eingerichtet, unter Verwendung von in dem Gerät vorliegenden Modellierungsdaten ein Modell zu bestimmen, welches die Modellierungsdaten beschreibt.

Erfindungsgemäß weist das Gerät eine Vermittlungseinheit auf, welche dazu eingerichtet ist, unter Verwendung des Modells aus einer für eine Übertragung vorgesehenen Datenmenge diejenigen Daten, die tatsächlich an das Datenverwaltungsmittel zu übertragen sind, auszuwählen.

Weiter ist das Gerät, insbesondere seine Vermittlungseinheit, dazu eingerichtet, die ausgewählten Daten an das Datenverwaltungsmittel zu übertragen.

Das System kann zur Durchführung des zuvor genannten Verfahrens eingesetzt werden. Insbesondere können die Elemente des Systems die im Zusammenhang mit dem Verfahren genannten Elemente sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vermittlungseinheit, dem erfindungsgemäßen Gerät und/oder dem erfindungsgemäßen System kombinierbar. So sind Verfahrensmerkmale auch als Eigenschaft der Vermittlungseinheit, des Geräts und/oder des System gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein System umfassend ein Datenverwaltungsmittel und ein Gerät mit einer Vermittlungseinheit;
- FIG 2: eine zeitabhängige Folge von Daten mit einer ersten Funktion; und
- FIG 3: eine anhand der zeitabhängigen Folge von Daten aus FIG 2 aktualisierte Funktion.

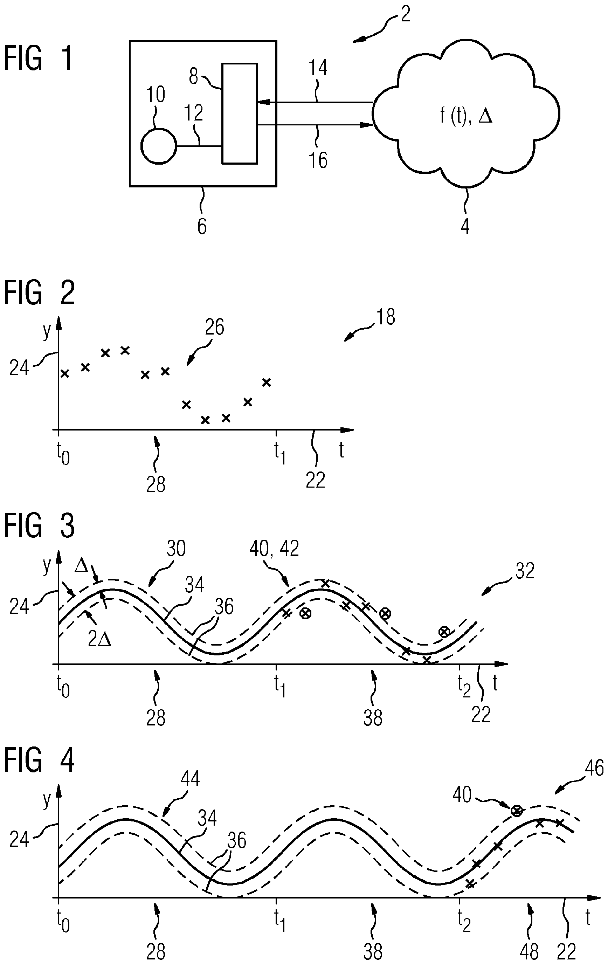

FIG 1 zeigt ein System 2 mit einem Datenverwaltungsmittel 4 und einem Gerät 6. Das Gerät 6 umfasst eine Vermittlungseinheit 8. Außerdem umfasst das Gerät 6 zumindest einen Sensor 10. Der Sensor 10 ist mit der Vermittlungseinheit 8 über eine Datenverbindung 12 verbunden.

In dem Gerät 6 fallen mehrere Daten (vgl. FIG 2) an. Beispielsweise werden in dem Gerät 6 die Daten mittels des Sensors 10 gemessen. Beispielsweise sind die Daten zeitabhängige Messwerte des Sensors 10.

In dem vorliegenden Beispiel entsprechend die angefallenen Daten einer für eine Übertragung vorgesehenen Datenmenge.

Die angefallenen Daten, welche die für eine Übertragung vorgesehene Datenmenge bilden, werden teilweise in drei Übertragungsschritten an das Datenverwaltungsmittel 4 übertragen.

Die drei Übertragungsschritte sind in FIG 2 bis 4 dargestellt.

FIG 2 zeigt ein Diagramm 18. Auf der x-Achse 22 des Diagramms 18 ist eine Zeit t aufgetragen. Auf der y-Achse 24 des Diagramms 18 kann ein beliebiger Parameter y aufgetragen sein. In diesem Beispiel ist auf der y-Achse 24 der zeitabhängige Messwert des Sensors 10 aufgetragen.

In FIG 2 sind beispielhaft Modellierungsdaten 26 als Kreuze dargestellt. Die Modellierungsdaten 26 sind innerhalb eines ersten Übertragungsschritts 28, welcher von t₀ bis t₁ reicht, in dem Gerät angefallen. Die Modellierungsdaten sind in diesem Beispiel innerhalb des ersten Übertragungsschritts 28 in dem Gerät angefallen.

In diesem Beispiel werden die Modellierungsdaten 26 vollständig an das Datenverwaltungsmittel 4 übertragen. Es wäre auch möglich, dass die Modellierungsdaten 26 nur teilweise an das Datenverwaltungsmittel 4 übertragen werden. Der in FIG 1 eingezeichnete Pfeil 16 verdeutlicht (unter anderem) die - zumindest teilweise - Übertragung der Modellierungsdaten 26 von dem Gerät 6 an das Datenverwaltungsmittel 4.

Das Datenverwaltungsmittel 4 bestimmt anhand der übertragenen Modellierungsdaten 26 ein erstes Modell 30. Das erste Modell 30 ist bespielhaft in FIG 3 dargestellt.

FIG 3 zeigt ein Diagramm 32. Die nachfolgende Beschreibung beschränkt sich im Wesentlichen auf die Unterschiede zum Diagramm aus FIG 2, auf das bezüglich gleich bleibender Merkmale verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

In das Diagramm 32 ist das erste Modell 30 eingetragen, welches anhand der Modellierungsdaten 26 aus FIG 2 bestimmt wurde. In diesem Beispiel weist das erste Modell 30 eine mathematische Funktion f(t) auf, welche in der Zeichnung als durchgezogene Linie 34 dargestellt ist. Weiter weist das Modell einen Toleranzbereich auf. Der Toleranzbereich legt sich um die mathematische Funktion f(t). In der Zeichnung wird der Toleranzbereich durch zwei gestrichelte Linien 36 abgegrenzt, sodass sich der Toleranzbereich zwischen den zwei gestrichelten Linien 36 in FIG 3 befindet.

Die Breite des Toleranzbereichs kann abhängig von der Funktion f(t) sein. Beispielsweise kann die Breite des Toleranzbereichs ein vorgegebenes Vielfaches eines Maximalwerts der Funktion f(t) sein.

In diesem Beispiel ist eine Breite des Toleranzbereichs derart gewählt, dass der kürzeste Abstand eines jeden Punktes auf einer der gestrichelten Linien 36 zu der Funktion f(t) gleich Δ ist. Der Toleranzbereich kann jedoch auch in einer anderen Weise gewählt werden.

Das erste Modell 30 wird von der Datenverwaltungsmittel 4 an die Vermittlungseinheit 8 übertragen. Die Übertragung des ersten Modells 30 ist in FIG 1 durch einen Pfeil 14 von der Datenverwaltungsmittel 4 an die Vermittlungseinheit 8 dargestellt.

Innerhalb des zweiten Übertragungsschritts 38, welcher zeitlich später als der erste Übertragungsschritt 28 ist, fallen weitere Daten an. In diesem Beispiel schließt sich der zweite Übertragungsschritt 38 an den ersten Übertragungsschritt 28 an. Der zweite Übertragungsschritt 38 liegt zwischen dem vorgegebenen Startzeitpunkt t₁ und dem vorgegebenen Endzeitpunkt t₂.

Die in dem zweiten Übertragungsschritt 38 anfallenden Daten stellen eine für eine Übertragung vorgesehene Datenmenge 40 dar. Die für eine Übertragung vorgesehenen Datenmenge 40, d. h. hier die in dem zweiten Übertragungsschritt 38 anfallenden Daten, sind in FIG 2 als Kreuze dargestellt.

Unter Verwendung des ersten Modells 30 werden aus der für eine Übertragung vorgesehenen Datenmenge 40 diejenigen Daten, die tatsächlich an das Datenverwaltungsmittel 4 zu übertragen sind, ausgewählt. Das Gerät 6, insbesondere die Vermittlungseinheit 8, überträgt die ausgewählten Daten an das Datenverwaltungsmittel 4. Die Übertragung der ausgewählten Daten von dem Gerät 6, insbesondere von der Vermittlungseinheit 8, an das Datenverwaltungsmittel 4 ist in FIG 1 mittels eines Pfeils 16 dargestellt.

Das Datenverwaltungsmittel 4 empfängt die übertragenen Daten und speichert sie.

Diejenigen Daten, die innerhalb des Toleranzbereichs 2Δ liegen - d. h. hier diejenigen Daten, die in FIG 3 zwischen den zwei gestrichelten Linien 36 liegen -, werden nicht ausgewählt und werden somit nicht an das Datenverwaltungsmittel 4 übertragen.

Diejenigen Daten, die außerhalb des Toleranzbereichs 2Δ liegen, sind in FIG 3 als Kreuz mit einem umschließenden Kreis dargestellt. Diejenigen Daten, die außerhalb des Toleranzbereichs 2Δ liegen, werden ausgewählt und werden somit an das Datenverwaltungsmittel 4 übertragen.

Die in dem zweiten Übertragungsschritt 38 für eine Übertragung vorgesehene Datenmenge 40 bildet aktualisierte Modellierungsdaten 42. Unter Verwendung der in dem zweiten Übertragungsschritt 38 übertragenen Daten bestimmt das Datenverwaltungsmittel 4 ein aktualisiertes Modell 44. Das aktualisierte Modell 44 beschreibt die aktualisierten Modellierungsdaten 42. Das aktualisierte Modell 44 ist in FIG 4 dargestellt.

In diesem Beispiel weist das aktualisierte Modell 44 eine aktualisierte Funktion fₐ(t) auf.

Insbesondere wurde das aktualisierte Modell 44 zumindest anhand der in dem zweiten Übertragungsschritt übertragenen Daten bestimmt.

Es wurden nur ein Teil der in dem zweiten Übertragungsschritt für eine Übertragung vorgesehenen Datenmenge 40 an das Datenverwaltungsmittel 4 übertragen.

Das aktualisierte Modell 44 kann (zusätzlich) unter Verwendung des früheren, ersten Modells 30 bestimmt werden. Das heißt, dass zur Bestimmung der aktualisierten Funktion fₐ(t) auch die bisherige Funktion f(t) herangezogen wird.

Weiter kann zur Bestimmung der aktualisierten Funktion fₐ(t) eine vorgegebene Datenrate herangezogen werden. Die Datenrate entspricht der Anzahl an Daten pro Zeiteinheit. Das heißt, dass der Abstand zweier Daten dem Kehrwert der Datenrate entspricht. Beispielsweise kann die Datenrate von einer Steuerung des Geräts 6 und/oder von dem Sensor 10 vorgegeben sein/werden. Die Datenrate kann an das Datenverwaltungsmittel 4 übermittelt werden, in dem Datenverwaltungsmittel 4 eingegeben werden und/oder von dem Datenverwaltungsmittel 4 (insbesondere anhand der übermittelten Daten) bestimmt werden.

Aus der bisherigen Funktion f(t) sowie aus der vorgegebenen Datenrate werden Soll-Daten für nicht übermittelte Daten berechnet. Beispielsweise kann anhand der Datenrate der jeweilige Zeitwert bestimmt werden, zu der die nicht übertragenen Daten angefallen sind. Die Solldaten können beispielsweise den Funktionswert f(t) zu dem jeweiligen Zeitwert und den jeweiligen Zeitwert umfassen.

Diese Soll-Daten für nicht übermittelte Daten werden ebenfalls zur Aktualisierung der Funktion herangezogen. Die aktualisierte Funktion fₐ(t) wird anhand der in dem zweiten Übertragungsschritt 38 übertragenen Daten und der Soll-Werte für nicht übermittelte Daten bestimmt.

FIG 4 zeigt ein Diagramm 46. Die nachfolgende Beschreibung beschränkt sich im Wesentlichen auf die Unterschiede zum Diagramm aus FIG 3, auf das bezüglich gleich bleibender Merkmale verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

In das Diagramm 46 ist das aktualisierte Modell 44 eingetragen, welches unter Verwendung der in dem zweiten Übertragungsschritt für eine Übertragung vorgesehenen Datenmenge 40, welche der aktualisierten Modellierungsdaten 42 entspricht, bestimmt wurde.

In diesem Beispiel weist das aktualisierte Modell 44 eine aktualisierte Funktion fₐ(t) auf, welche in der Zeichnung als durchgezogene Linie 34 dargestellt ist. Weiter weist das Modell einen - gegebenenfalls aktualisierten - Toleranzbereich auf. Der (ggf. aktualisierte) Toleranzbereich legt sich um die mathematische Funktion fₐ(t). In der Zeichnung wird der (ggf. aktualisierte) Toleranzbereich durch zwei gestrichelte Linien 36 abgegrenzt, sodass sich der(ggf. aktualisierte) Toleranzbereich zwischen den zwei gestrichelten Linien 36 in FIG 4 befindet.

Zeitlich nach dem zweiten Übertragungsschritt 38 liegt ein dritter Übertragungsschritt 48. Der dritte übertragungsschritt 48 schließt hier direkt an den zweiten Übertragungsschritt 38 an und beginnt zum Startzeitpunkt t₂.

In dem dritten Übertragungsschritt 48 fallen in dem Gerät 6 weitere Daten an. Die in dem dritten Übertragungsschritt 48 anfallenden Daten stellen eine für eine Übertragung vorgesehene Datenmenge 40 dar. Die für eine Übertragung vorgesehenen Datenmenge 40, d. h. hier die in dem zweiten Übertragungsschritt 38 anfallenden Daten, sind in FIG 4 als Kreuze dargestellt.

In dem dritten Übertragungsschritt 48 wird unter Verwendung des aktualisierten Modells 44 aus der für eine Übertragung vorgesehenen Datenmenge 40 diejenigen Daten, die tatsächlich an das Datenverwaltungsmittel 4 zu übertragen sind, ausgewählt und das Gerät überträgt die ausgewählten Daten an das Datenverwaltungsmittel 4. Die Auswahl in dem dritten Übertragungsschritt 48 erfolgt in analoger Weise wie die Auswahl in dem zweiten Übertragungsschritt 38 (vgl. FIG 3).

Anhand der in dem dritten Übertragungsschritt 48 übertragenen Daten kann das aktualisierte Modell 44 wiederum aktualisiert werden.

Aufgrund des beschriebenen Verfahrens muss nicht die gesamte für eine Übertragung vorgesehene Datenmenge 40 an das Datenverwaltungsmittel 4 übertragen werden. Durch die Auswahl der tatsächlich an das Datenverwaltungsmittel 4 zu übertragen Daten kann die Anzahl der übertragenen Daten - und damit das übertragene Datenvolumen - reduziert werden. Beispielsweise kann die Anzahl der übertragenen Daten - und damit vorzugsweise das übertragene Datenvolumen - um mindestens 50%, vorzugsweise um mindestens 80%, reduziert werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenübertragung (16) von einem Gerät (6) an ein Datenverwaltungsmittel (4),
bei dem
unter Verwendung von in dem Gerät (6) vorliegenden Modellierungsdaten (26, 42) ein Modell (30, 44) bestimmt wird, welches die Modellierungsdaten (26, 42) beschreibt,
unter Verwendung des Modells (30, 44) aus einer für eine Übertragung vorgesehenen Datenmenge (40) diejenigen Daten, die tatsächlich an das Datenverwaltungsmittel (4) zu übertragen sind, ausgewählt werden und
das Gerät (6) die ausgewählten Daten an das Datenverwaltungsmittel (4) überträgt.

2. Verfahren nach Anspruch 1,
**dadurch gekennzeichnet, dass** das Datenverwaltungsmittel (4) ein Server, eine Cloud und/oder ein Internet-der-Dinge-Service ist.

3. Verfahren nach Anspruch 1 oder 2,
**dadurch gekennzeichnet, dass**
das Gerät (6) die Modellierungsdaten (26, 42) zumindest teilweise an das Datenverwaltungsmittel (4) überträgt und
das Modell (30, 44) mittels des Datenverwaltungsmittels (4) bestimmt wird.

4. Verfahren nach einem der vorhergehenden Ansprüche, **dadurch gekennzeichnet, dass**
das Gerät (6) in einem ersten, früheren Übertragungsschritt (28, 38) die Modellierungsdaten (26, 42) zumindest teilweise an das Datenverwaltungsmittel (4) überträgt,
zumindest anhand der übertragenen Modellierungsdaten (26, 42) das Modell (30, 44) bestimmt wird und
in einem zweiten, zeitlich späteren Übertragungsschritt (38, 48)
- unter Verwendung des Modells (30, 44) aus der für eine Übertragung vorgesehenen Datenmenge (40) diejenigen Daten, die tatsächlich an das Datenverwaltungsmittel (4) zu übertragen sind, ausgewählt werden und
- das Gerät (6) die ausgewählten Daten an das Datenverwaltungsmittel (4) überträgt.

5. Verfahren nach Anspruch 4,
**dadurch gekennzeichnet, dass**
die Modellierungsdaten (26, 42) innerhalb des ersten, früheren Übertragungsschritts (28, 38) anfallen und
die für eine Übertragung vorgesehene Datenmenge (40) innerhalb des zweiten, späteren Übertragungsschritts (38, 48) anfällt.

6. Verfahren nach Anspruch 4 oder 5,
**dadurch gekennzeichnet, dass**
in dem ersten, früheren Übertragungsschritt (38)
- unter Verwendung eines früheren Modells (30) aus den Modellierungsdaten (42) diejenigen Modellierungsdaten (42), die an das Datenverwaltungsmittel (4) zu übertragen sind, ausgewählt werden,
- das Gerät die ausgewählten Modellierungsdaten (42) an das Datenverwaltungsmittel (4) überträgt und
zumindest anhand der übertragenen Modellierungsdaten (42) das erstgenannte Modell (44) bestimmt wird.

7. Verfahren nach Anspruch 6,
**dadurch gekennzeichnet, dass**
das in dem ersten, früheren Übertragungsschritt (38) verwendete frühere Modell (30) vorgegeben ist.

8. Verfahren nach Anspruch 6 oder 7,
**dadurch gekennzeichnet, dass**,
falls in dem ersten, früheren Übertragungsschritt (38) einige Modellierungsdaten (42) nicht übertragen werden, Soll-Daten für die in dem ersten, früheren Übertragungsschritt (38) nicht übertragenen Modellierungsdaten (42) anhand des früheren Modells (30) bestimmt werden,
wobei die Soll-Daten zur Bestimmung des erstgenannten Modells (44) herangezogen werden.

9. Verfahren nach einem der Ansprüche 4 bis 8,
**dadurch gekennzeichnet, dass**
unter Verwendung der in dem zweiten Übertragungsschritt (38) übertragenen Daten ein aktualisiertes Modell (44) bestimmt wird, und
in einem dritten Übertragungsschritt (48), welcher zeitlich nach dem zweiten Übertragungsschritt (38) liegt,
- unter Verwendung des aktualisierten Modells (44) aus einer für eine Übertragung vorgesehene Datenmenge (40) diejenigen Daten, die tatsächlich an das Datenverwaltungsmittel (4) zu übertragen sind, ausgewählt werden und
- das Gerät (6) die ausgewählten Daten an das Datenverwaltungsmittel (4) überträgt.

10. Verfahren nach Anspruch 11,
**dadurch gekennzeichnet, dass**
die in dem zweiten Übertragungsschritt (38) für eine Übertragung vorgesehene Datenmenge (40) aktualisierte Modellierungsdaten (42) bilden und
unter Verwendung der in dem zweiten Übertragungsschritt (38) übertragenen Daten ein aktualisiertes Modell (44) bestimmt wird, welches die aktualisierten Modellierungsdaten (42) beschreibt.

11. Verfahren nach einem der vorhergehenden Ansprüche,
**dadurch gekennzeichnet, dass**
das erstgenannte Modell (30, 44) eine mathematische Funktion (34) und einen Toleranzbereich umfasst, wobei sich der Toleranzbereich um die mathematische Funktion (34) legt, und dass diejenigen Daten, die innerhalb des Toleranzbereichs liegen, nicht ausgewählt werden und somit nicht an das Datenverwaltungsmittel (4) übertragen werden.

12. Verfahren nach einem der vorhergehenden Ansprüche,
**dadurch gekennzeichnet, dass**
das erstgenannte Modell (30, 44) eine mathematische Funktion (34) und einen Toleranzbereich umfasst, wobei sich der Toleranzbereich um die mathematische Funktion (34) legt, und dass diejenigen Daten, die außerhalb des Toleranzbereichs liegen, ausgewählt werden und somit an das Datenverwaltungsmittel (4) übertragen werden.

13. Vermittlungseinheit (8) zur Datenübertragung (16) von einem Gerät (6) an ein Datenverwaltungsmittel (4),
**dadurch gekennzeichnet, dass**
die Vermittlungseinheit (8) dazu eingerichtet ist,
unter Verwendung eines Modells (30, 44), welches unter Verwendung von in dem Gerät (6) vorliegenden Modellierungsdaten (26, 42) bestimmt wird und welches die Modellierungsdaten (26, 42) beschreibt, aus einer für eine Übertragung vorgesehenen Datenmenge (40) diejenigen Daten, die tatsächlich an das Datenverwaltungsmittel (4) zu übertragen sind, auszuwählen und
die ausgewählten Daten an das Datenverwaltungsmittel (4) zu übertragen.

14. Gerät (6) mit einer Vermittlungseinheit (8) zur Datenübertragung (16) von einem Gerät (6) an ein Datenverwaltungsmittel (4),
**dadurch gekennzeichnet, dass**
die Vermittlungseinheit (8) dazu eingerichtet ist,
unter Verwendung eines Modells (30, 44), welches unter Verwendung von in dem Gerät (6) vorliegenden Modellierungsdaten (26, 42) bestimmt wird und welches die Modellierungsdaten (26, 42) beschreibt, aus einer für eine Übertragung vorgesehenen Datenmenge (40) diejenigen Daten, die tatsächlich an das Datenverwaltungsmittel (4) zu übertragen sind, auszuwählen, und
das Gerät (6) dazu eingerichtet ist, die ausgewählten Daten an das Datenverwaltungsmittel (4) zu übertragen.

15. System umfassend ein Datenverwaltungsmittel (4) und ein Gerät (6),
**dadurch gekennzeichnet, dass**
das Datenverwaltungsmittel (4) dazu eingerichtet ist,
unter Verwendung von in dem Gerät (6) vorliegenden Modellierungsdaten (26, 42) ein Modell (30, 44) zu bestimmen, welches die Modellierungsdaten (26, 42) beschreibt,
das Gerät (6) eine Vermittlungseinheit (8) aufweist, welche dazu eingerichtet ist,
unter Verwendung des Modells (30, 44) aus einer für eine Übertragung vorgesehenen Datenmenge (40) diejenigen Daten, die tatsächlich an das Datenverwaltungsmittel (4) zu übertragen sind, auszuwählen, und
das Gerät (6) dazu eingerichtet ist, die ausgewählten Daten an das Datenverwaltungsmittel (4) zu übertragen.
